(19) Europäisches Patentamt
European Patent Office
Office européen des brevets

(11) Publication number: 0 100 764 B1

# (12) EUROPEAN PATENT SPECIFICATION

(45) Date of publication of patent specification: 04.06.86

(51) Int. Cl.$^4$: C 10 K 1/16

(21) Application number: 83870075.5

(22) Date of filing: 27.07.83

## (54) Process for removal of carbon oxides from gas mixtures.

(30) Priority: 29.07.82 US 403186

(43) Date of publication of application:
15.02.84 Bulletin 84/07

(45) Publication of the grant of the patent:
04.06.86 Bulletin 86/23

(84) Designated Contracting States:
BE DE FR GB NL

(56) References cited:
DE-C- 935 144
DE-C- 936 715
FR-A-2 318 105
IT-A- 384 745
US-A-3 266 220
US-A-3 415 615

(73) Proprietor: MONSANTO COMPANY
Patent Department 800 North Lindbergh Boulevard
St. Louis, Missouri 63166 (US)

(72) Inventor: Makin, Earle Clement
1208 Deats Road
Dickinson Texas 77539 (US)

(74) Representative: Lunt, John Cooper et al
Monsanto Europe S.A. Patent Department
Avenue de Tervuren 270-272 Letter Box No 1
B-1150 Brussels (BE)

EP 0 100 764 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the invention

This invention relates to a process for purification of mixed gas streams, and, in particular, relates to the simultaneous removal of carbon monoxide and carbon dioxide from mixed gas streams by absorption with an alkylnitrile or alkoxyalkylnitrile absorbent.

Many important industrial processes require the removal of carbon monoxide and carbon dioxide from mixed gas streams in which they occur. For example, in coal gasification large quantities of carbon dioxide and hydrogen sulfide must be removed from the raw gas before it is suitable for use. Substantial quantities of carbon monoxide and carbon dioxide are also often present in synthesis gas.

In the past, carbon dioxide has been removed, either alone or in combination with other impurities, from mixed gas streams by a variety of methods. One of the earliest known methods of carbon dioxide removal from mixed gas streams involves the use of alkanolamines such as monoethanolamine or diethanolamine as disclosed in U.S. 1,783,901 to Bottoms. Later variations in the use of such alkanolamines for carbon dioxide removal included diglycolamines as in U.S. 2,712,978 to Blohm et al and amines dissolved in glycol as taught in U.S. 2,946,652 to Bloch. These alkanolamines are effective for removal of carbon dioxide where the mixed gas stream contains only one or two additional impurities to be removed such as hydrogen sulfide. But where other impurities are present, such as carbonyl sulfide, carbon disulfide, hydrogen cyanide, organic acids and mercaptans, competing reactions and recovery problems exist which significantly reduce the effectiveness of the alkanolamines in removing carbon dioxide. Other amine absorbents for carbon dioxide removal have since been developed as typified by U.S. 4,100,257 to Linden et al.

Aqueous ammonia solutions and liquid ammonia have been used to extract carbon dioxide from natural gas as in U.S. 3,524,722 to Every et al. Corrosion is a problem here and the solid ammonium carbonate requires further processing to be usable.

Various alkaline solutions such as alkali metal salts and alkali or alkaline earth metal hydroxides have been found useful in carbon dioxide removal. The alkali metal salts as in U.S. 2,912,301 to Schreiner et al, include, for example, sodium and potassium carbonates. The absorption rate is low due to the slow chemical reaction between dissolved molecular carbon dioxide and hydroxyl ions.

Catalytic conversion methods, while effective in neutralizing carbon monoxide and carbon dioxide, convert the carbon oxides to other components rather than physically removing them from the gas stream and thus do not result in recovery of usable carbon oxides. Catalyst systems have also been used to oxidize carbon monoxide to carbon dioxide as in U.S. 4,292,288 to Gladrow.

Carbon monoxide removal from mixed gas streams can be accomplished by absorption in water or in the alkaline solutions disclosed above. Such methods, however, still leave up to 4—5% carbon monoxide in the gas. Removal of most of the remaining small quantity of carbon monoxide is by various salts such as a copper-ammonium salt of a weak acid, such as a formate, carbonate or acetate, with formation of a cuprous-ammonium-carbon monoxide complex. Here also the carbon monoxide is not available for use since it is bound up in the complex which must be heated to free the carbon monoxide. Side reactions further complicate the process, such as the auto-oxidation of cuprous to cupric ions.

It is also known to the art that carbon monoxide can be recovered from mixed gas streams by means of a cuprous salt in propionitrile such as cuprous chloride. In U.S. 3,415,615, a highly saturated solution of a cuprous salt, preferably cuprous chloride, in propionitrile is used in the substantial absence of water to selectively form a salt complex with the carbon monoxide and with the unsaturated hydrocarbons, such as propylene. The complex must then be separated from the uncomplexed gases and the non-chemically complexed gases and then subjected to solvent extraction and further processing to recover the carbon monoxide. The patent specifically states that carbon dioxide is not complexed by this process.

US—A—3 266 220 describes a process for the removal of carbon dioxide from a gaseous mixture of hydrocarbons and/or other non acidic constituents containing carbon dioxide by the use of a selective solvent consisting essentially of at least one ether of a carbonitrile having the formula R—O—R'—CN, wherein R and R' are aliphatic groups of 1—4 carbon atoms.

According to FR—A—2 318 105, acetonitrile is an effective solvent for the absorption of carbon dioxide from a current of hydrogen containing oxides of carbon and/or sulfurated gases.

The process of this invention avoids the problems of the prior art by providing a method for simultaneous removal of carbon monoxide and carbon dioxide from feed gas streams containing carbon monoxide and carbon dioxide and at least one additional gaseous component without formation of chemical complexes or the requirement of multi-stage removal procedures.

Summary of the invention

According to the invention a process is provided for a simultaneous separation of carbon dioxide and carbon monoxide from feed gas streams containing carbon monoxide and carbon dioxide and at least one additional gaseous component comprising contacting the gas stream with a liquid nitrile absorbent having the general formula R—CN wherein R is selected from alkyl radicals having from one to five carbon atoms and alkoxyalkyl radicals having from two to ten carbon atoms and mixtures thereof, maintaining the temperature of the gas stream during separation at a temperature below the decomposition temperature of

the nitrile absorbent and removing the nitrile absorbent containing dissolved carbon dioxide and carbon monoxide from contact with the mixed gas stream.

The invention also involves preferential separation of carbon monoxide from the carbon dioxide after these two carbon oxides have been removed from the mixed gas stream using specific nitrile absorbents within the above general formula having enhanced affinity for carbon dioxide.

Description of preferred embodiments

The liquid nitrile absorbents which are used to extract and separate carbon monoxide and carbon dioxide from mixed gas streams are those nitriles encompassed within the general formula R—CN wherein R is selected from alkyl radicals having from one to five carbon atoms and alkoxyalkyl radicals having from two to ten preferably two to six carbon atoms. Suitable nitriles where R is alkyl include alkylnitriles such as acetonitrile, propionitrile, n-butyronitrile, isobutyronitrile, n-valeronitrile, isovaleronitrile and capronitrile. Of this group propionitrile is preferred. Where R is an alkoxyalkyl radical the nitriles useful in the practice of the invention include methoxyacetonitrile, ethoxyacetonitrile, propoxyacetonitrile, butoxyacetonitrile, pentoxyacetonitrile, pentoxyacetonitrile, 2-methoxypropionitrile, 3-methoxypropionitrile, 3-ethoxypropionitrile, 3-propoxypropionitrile, 3-butoxypropionitrile, 3-methoxybutyronitrile, 4-methoxybutyronitrile, 4-ethoxybutyronitrile, 5-methoxyvaleronitrile and 6-methoxycapronitrile. The preferred alkoxyalkyl nitriles are the alkoxypropionitriles such as 2-methoxypropionitrile, 3-ethoxypropionitrile and 3-methoxypropionitrile which is especially preferred.

These nitrile absorbents, although capable of separating substantial amounts of carbon dioxide from mixed gas streams, are of unique utility where the gas stream contains both carbon monoxide and carbon dioxide. Simultaneous removal of both of these carbon oxide gases is easily accomplished. From 50 up to 70% or more of the carbon dioxide can be removed. In addition, the nitrile absorbent can be selected or two or more nitrile absorbents blended so as to provide $CO_2$/CO separation factors (as hereinafter defined) of from 10 to 1 up to 40 to 1. This high degree of flexibility is, furthermore, not affected by any of the other gases that may be present in the stream.

In the separation of carbon monoxide and carbon dioxide from mixed gas streams there are a number of factors which affect the separation efficiency of the nitrile absorbents. The mixed gas stream will often be under pressure and at elevated temperature conditions at the time separation is required. A thermal swing can be used alone or in combination with a pressure swing in effecting the gas separation. Separation and absorption of the carbon monoxide and carbon dioxide can be at any desired and convenient temperature level below the decomposition temperature of the nitrile absorbent at a pressure where the vapor pressure of the nitrile absorbent is a minor fraction of the total system pressure. While the temperature may vary widely, temperatures from 20°C to 250°C will include most thermal conditions that must be considered during separation. A pressure swing can be used also, for example, superatmospheric absorption wherein preferentially dissolved carbon dioxide is ultimately recovered from the nitrile absorbent by a reduction in pressure. The pressure swing can also consist of absorption at substantially atmospheric pressure wherein dissolved carbon dioxide is recovered from the nitrile by subatmospheric stripping. Although gas feed pressures of from subatmospheric up to 3500 kPa may be encountered depending on the type of mixed gas stream, most gas streams involve pressure of from atmospheric to 350 kPa.

Any carbon monoxide and carbon dioxide containing mixed gas stream is applicable to the process of this invention, for example, coal gas, usually a mixture of hydrogen, methane, carbon monoxide, olefins, benzene, nitrogen, and carbon dioxide; natural gas, primarily hydrogen and methane with small amounts of propane and other low molecular weight hydrocarbons, olefins, hydrogen sulfide, carbon monoxide and carbon dioxide; and synthesis and refinery gases which can vary widely in composition depending on the manufacturing operation and may contain, in addition to any of the above gases, mercaptans, ammonia, carbonyl sulfide, carbon disulfide, hydrogen cyanide, water and the like. In some instances, various inert diluents as nitrogen or argon may also be present in the mixed gas stream.

Since the separation process does not involve the formation of a complex or other chemical reaction and is in essence a physical separation with reduction in pressure of the gas stream and/or increase in the temperature of the nitrile absorbent any conventional gas purification liquid absorption system may be used in the practice of the invention, from simple extraction operations to complex, continuous multiple-step recycle systems in a manner well known in the art.

The invention is further illustrated by the following examples in which all parts and percents are by weight unless otherwise indicated. The separation factors are determined by dividing the mol. ratio of the more soluble species by the less soluble species in the liquid phase by the same relative ratios in the vapor phase as shown below.

$$\text{Separation factor } \beta \equiv \frac{CO_2/CO \text{ (liquid phase)}}{CO_2/CO \text{ (vapor phase)}}$$

The solubility ratio is determined by dividing the weight percent of the more soluble species in the liquid phase by the weight percent of the less soluble species in the liquid phase.

Example I

This example compares the carbon monoxide and carbon dioxide solubility in propionitrile (PN) and in 3-methoxypropionitrile (MOPN) at various temperatures and mole percents of carbon dioxide in solution. The results were as follows:

TABLE I

| | PN | | MOPN | |
|---|---|---|---|---|
| $CO_2$/CO mixture | 29.6/70.4 | 24.5/75.5 | 33/67 | 27.3/72.7 |
| Temp. °C | 24 | 0 | 24 | 0 |
| Wt. % $CO_2$ loading in nitrile | 6.44 | 8.36 | 4.29 | 6.85 |
| Separation factor $CO_2$/CO | 18.5 | 36.8 | 20.8 | 9.4 |
| Mol % $CO_2$ in solution | 88.6 | 92.3 | 91.1 | 77.9 |

This example indicates that PN and MOPN absorb carbon dioxide preferentially over carbon monoxide at separation factors of around 10 to 1 up to about 40 to 1, depending on the temperature.

Example II

In this example a series of 9 test runs were conducted on solubility and separation of $CO_2$/CO mixtures of varying mol. percent concentrations using MOPN. Run No. 9 also contained 17.3 mol.% hydrogen and 4.9 mol.% methane in the feed gas stream. The results are shown in Table II.

TABLE II

| Run No. | 1 | 2 | 3 | 4 | 5 | 6 | 7 | 8 | 9 |
|---|---|---|---|---|---|---|---|---|---|
| Gas feed | | | | | | | | | |
| Mol.% CO | 52.4 | 68.7 | 52.4 | 52.4 | 52.7 | 100 | — | — | 69.9 |
| Mol. % $CO_2$ | 47.6 | 29.0 | 47.6 | 47.6 | 47.3 | — | 100 | 100 | 7.9 |
| Grams MOPN | 141 | 141 | 141 | 142 | 141 | 141 | 141 | 141 | 141 |
| Temp. °C MOPN | 24 | 24 | 23→0 | 0 | 24 | 24 | 24 | 24 | 24 |
| Final gas pressure | | | | | | | | | |
| kPa | 2227 | 2020 | 1910 | 1738 | 1896 | 2075 | 1551 | 1551 | 2069 |
| (psia) | (323) | (293) | (277) | (252) | (275) | (301) | (225) | (225) | (300) |
| Partial pressure | | | | | | | | | |
| -kPa -CO | 1489 | 1634 | 1489 | 1248 | 1317 | 2075 | | | 1558 |
| (psia) | (216) | (237) | (216) | (181) | (191) | (301) | — | — | (226) |
| $-CO_2$ | 738 | 386 | 421 | 490 | 579 | | 1551 | 1551 | 90 |
| (psia) | (107) | (56) | (61) | (71) | (84) | — | (225) | (225) | (13) |
| Free space | | | | | | | | | |
| Mol.% CO | 67.0 | 81.0 | 72.7 | 71.7 | 69.3 | 100 | — | — | 69.9 |
| Mol.% $CO_2$ | 33.0 | 19.0 | 27.3 | 28.3 | 30.7 | — | 100 | 100 | 4.4 |
| Solution | | | | | | | | | |
| Mol.% CO | 8.9 | 21.2 | 22.1 | 29.7 | 14.0 | — | — | — | 16.1 |
| Mol.% $CO_2$ | 91.1 | 78.8 | 77.9 | 70.3 | 86.0 | — | — | — | 77.9 |
| Separation factor | | | | | | | | | |
| $CO_2$/CO | 20.8 | 15.8 | 9.4 | 6.0 | 13.9 | — | — | — | 76.9 |

The "free space" mol.% CO and $CO_2$ is the % in the vapor phase not absorbed by the MOPN solution. Carbon dioxide selectivity for MOPN is shown by the separation factor.

The procedure used in conducting these runs for pure CO and $CO_2$ was carried out by charging pure CO or $CO_2$ to a stainless steel high pressure cell of 500 cc. capacity containing 150 cc of nitrile absorbent and equipped with an internal magnetic stirrer and with appropriate valves to sample both liquid and vapor phase.

Solubility of pure CO and $CO_2$ were determined separately by pumping up to cell pressure to 1378 kPa—2240 kPa with the appropriate gas with constant agitation of the absorbent until equilibrium was established (the point at which no more gas was required after 30 minutes of agitation, to maintain the desired pressure).

After about 30 minutes agitation at either 0°C (wet ice bath) or 23 to 25°C the pressure was slowly released and the solvent was heated to just below its boiling point to assure complete stripping of dissolved gas from the solvent.

The total volume of expelled gas was corrected for the cell free space, temperature and compressibility. The corrected gas volume difference between total gas volume and free space volume was that dissolved in the absorbent.

Generally the preferred absorbents have such a low vapor pressure with respect to the total system pressure that the absorbent vapor pressure effect is insignificant and may be ignored.

It was found, using the above described procedure, that the solubility of pure CO is only a small fraction of pure $CO_2$ solubility in nitrile absorbents.

Into the high pressure cell described above for pure gas solubility characteristics, the binary or multi component mixed gases were pumped to a pressure of about 2067 kPa. After equilibrium was established between the absorbent and the gas (generally 30 minutes or more of vigorous agitation) a sample of gas in vapor space of the cell was withdrawn and analyzed by G.C.

From the volume analysis of the feed gas and the analysis of the undissolved gas in the vapor space above the absorbent one can calculate the composition of the gas in solution.

This calculated composition can be verified by withdrawing a small sample of absorbent under pressure into a sampling bomb or hypodermic syringe which is then transferred to G.C. for analysis.

The analysis was conducted by back calculating the composition of the solubilized gas and verifying material balance after metering the total gas volume involved in the test.

Example III

Example II is repeated using PN instead of MOPN and with 7 test runs of various mol. percentages of carbon monoxide and carbon dioxide. Table III gives the results.

TABLE III

| Run No. | 1 | 2 | 3 | 4 | 5 | 6 | 7 |
|---|---|---|---|---|---|---|---|
| Gas feed Mol.% CO | 100 | — | 52.4 | — | 100 | 100 | 52.4 |
| Mol.% $CO_2$ | — | 100 | 47.6 | 100 | — | — | 47.6 |
| Grams PN | 117 | 117 | 117 | 117 | 117 | 117 | 117 |
| Temp. °C PN | 25 | 25 | 24—25 | 24—25 | 24—25 | 24—25 | 0 |
| Final gas pressure kPa | 2095 | 1551 | 2185 | 1378 | 2095 | 2075 | 2116 |
| (psia) | (304) | (225) | (317) | (200) | (304) | (301) | (307) |
| Partial pressure -kPa -CO | 2095 | — | 1537 | — | 2095 | 2075 | 1600 |
| (psia) | (304) | | (223) | | (304) | (301) | (232) |
| -$CO_2$ | — | 1551 | 648 | 1378 | — | — | 517 |
| (psia) | | (225) | (94) | (200) | | | (75) |
| Free space Mol.% CO | 100 | — | 70.4 | — | 100 | 100 | 75.5 |
| Mol.% $CO_2$ | — | 100 | 29.6 | 100 | — | — | 24.5 |
| Solution Mol.% CO | 100 | — | 11.4 | — | 100 | 100 | 7.7 |
| Mol.% $CO_2$ | — | 100 | 88.6 | 100 | — | — | 92.3 |
| Separation factor $CO_2$/CO | — | — | 18.5 | — | — | — | 36.8 |

Example IV

Using a mixed gas feed of 52.4 mol.% CO and 47.6 mol.% $CO_2$, a stainless steel cell containing 150 cc. of nitrile absorbent as described heretofore was filled with the gas mixture while constantly agitating the absorbent until the pressure reached approximately 2067 kPa at 24 to 25°C. A sample of the gas in the vapor phase was analyzed. From this analysis and the volume of the gas feed, the absorbent composition was calculated. The results are shown in Table IV.

TABLE IV

| Absorbent | Mol. wt. | Pressure kPa | Wt. % gas in solution $CO_2$ | CO | Solubility ratio $CO_2/CO$ |
|---|---|---|---|---|---|
| Acetonitrile | 41.05 | 2172 | 7.08 | 0.58 | 12.2/1.0 |
| Propionitrile* | 55.08 | 2186 | 6.44 | 0.53 | 12.2/1.0 |
| Valeronitrile | 83.11 | 2103 | 5.15 | 0.42 | 12.3/1.0 |
| Methoxyacetonitrile | 71.07 | 2206 | 4.72 | 0.30 | 15.7/1.0 |
| Methoxypropionitrile* | 85.09 | 2227 | 4.29 | 0.27 | 15.9/1.0 |
| Ethoxypropionitrile | 89.10 | 2227 | 3.86 | 0.24 | 16.1/1.0 |

*Data generated from these nitriles was used to calculate results for the other nitriles.

This example shows that the molecular weight of the nitrile has no significant affect on the solubility ratio and that both low and high molecular weight nitriles exhibit the same range of solubility ratios.

While the exact mechanism is not clearly understood, it is believed that as the carbon chain increases on the aliphatic nitrile group, the electron withdrawing power of the nitrile decreases rendering the nitrogen less basic.

However, incorporation of the ether linkage in the aliphatic carbon chain with their ability to donate or act as electron donors increases the basicity of the nitrile group.

From a physical and chemical viewpoint of practicality a preferred absorbent structure should exhibit the optimum selectivity for separating $CO_2$ from gases containing the same while providing a vehicle relatively easy to strip by a change in pressure and/or temperature. Concurrent with this preferred absorbent selectivity and stripping behavior, thermal and chemical stability of the solvent must be considered.

Acetonitrile may exhibit higher electron withdrawing power than valeronitrile but the volatility of acetonitrile is such that significant quantities of its vapor could be included in a vaporized gas stream enriched in $CO_2$ stripped from acetonitrile.

As a practical matter, the absorbent choice should be predicated on relative economics of the process where removal of entrained vapors from gas enriched in $CO_2$ must be achieved.

A further consideration is the relative potential hazard for the solvent of choice. For example, methoxyacetonitrile is more hazardous than methoxypropionitrile since methoxyacetonitrile is absorbed through the skin.

The foregoing detailed description has been given primarily for clearness of understanding only, and unnecessary limitations are not to be construed therefrom. The invention is not to be limited to the exact details shown and described since obvious modifications will occur to those skilled in the art, and any departure from the description herein that conforms to the present invention is intended to be included within the scope of the claims.

**Claims**

1. A process for simultaneous separation of carbon monoxide and carbon dioxide from a feed gas stream containing carbon monoxide, carbon dioxide and at least one additional gaseous component characterized by contacting the feed gas stream with a liquid nitrile absorbent having the general formula R—CN wherein R is selected from alkyl groups having from one to five carbon atoms and alkoxyalkyl groups having from two to ten carbon atoms, and mixtures thereof to form a liquid nitrile absorbent carbon monoxidecarbon dioxide mixture, maintaining the temperature of the mixture during separation at a temperature below the decomposition temperature of the liquid nitrile absorbent and removing the liquid nitrile absorbent, carbon monoxide-carbon dioxide mixture from contact with the feed gas stream.

2. The process of Claim 1 wherein R is an alkyl group having from one to five carbon atoms.

3. The process of Claim 2 wherein R is ethyl or propyl.

4. The process of Claim 1 wherein R is an alkoxyalkyl group having from two to ten carbon atoms.

5. The process of Claim 4 wherein R is methoxyethyl or methoxybutyl.

6. The process of Claim 1 wherein the feed gas stream is selected from coal gas, natural gas and synthesis gas.

7. The process of Claim 1 wherein the contacting of the feed gas stream with the liquid nitrile absorbent occurs at a temperature of from 20° to 250°C.

8. The process of Claim 1 wherein the contacting of the feed gas stream with the liquid nitrile absorbent occurs at a pressure of from atmospheric (101.35 kPa) to 350 kPa.

9. The process of Claim 1 wherein from 50 to 70 percent of the carbon dioxide in the feed gas stream is absorbed by the liquid nitrile absorbent.

10. The process of Claim 1 characterized by a $CO_2$/CO separation factor of from 10 to 1 to 40 to 1.

11. A process for separation of carbon monoxide and carbon dioxide from a feed gas stream containing carbon monoxide, carbon dioxide and at least one additional gas characterized by contacting the feed gas stream with propionitrile wherein the temperature of the gas stream during separation is less than the decomposition temperature of the propionitrile and removing the propionitrile containing dissolved carbon monoxide and carbon dioxide from contact with the feed gas stream.

12. A process for separation of carbon monoxide and carbon dioxide from a feed gas stream containing carbon monoxide and carbon dioxide and at least one additional gas characterized by contacting the feed gas stream with 3-methoxypropionitrile wherein the temperature of the gas stream during separation is less than the decomposition temperature of the 3-methoxypropionitrile and removing the 3-methoxypropionitrile containing dissolved carbon monoxide and carbon dioxide from contact with the feed gas stream.

**Patentansprüche**

1. Verfahren zur gleichzeitigen Abtrennung von Kohlenmonoxid und Kohlendioxid aus einem Kohlenmonoxid, Kohlendioxid und mindestens einen weiteren gasförmigen Bestandteil enthaltenden Beschickungsgasstrom, dadurch gekennzeichnet, daß man den Beschickungsgasstrom mit einem flüssigen Nitril-Absorbens der allgemeinen Formel

R—CN

in der R aus Alkylgruppen mit 1 bis 5 Kohlenstoffatomen oder Alkoxyalkylgruppen mit 2 bis 10 Kohlenstoffatomen ausgewählt ist, oder Mischungen davon unter Bildung einer Mischung aus dem flüssigen Nitril-Absorbens, Kohlenmonoxid und Kohlendioxid in Kontakt bringt, die Temperatur der Mischung während der Abtrennung bei einer unterhalb der Zersetzungstemperatur des flüssigen Nitril-Absorbens liegenden Temperatur hält und den Kontakt zwischen der Mischung aus dem flüssigen Nitril-Absorbens, Kohlenmonoxid und Kohlendioxid und dem Beschickungsgasstrom unterbricht.

2. Verfahren nach Anspruch 1, dadurch gekennzeichnet, daß R für eine Alkylgruppe mit 1 bis 5 Kohlenstoffatomen steht.

3. Verfahren nach Anspruch 2, dadurch gekennzeichnet, daß R für eine Ethylgruppe oder eine Propylgruppe steht.

4. Verfahren nach Anspruch 1, dadurch gekennzeichnet, daß R für eine Alkoxyalkylgruppe mit 2 bis 10 Kohlenstoffatomen steht.

5. Verfahren nach Anspruch 4, dadurch gekennzeichnet, daß R für eine Methoxyethylgruppe oder eine Methoxybutylgruppe steht.

6. Verfahren nach Anspruch 1, dadurch gekennzeichnet, daß der Beschickungsgasstrom aus der Kohlengas, Erdgas und Synthesegas umfassenden Gruppe ausgewählt ist.

7. Verfahren nach Anspruch 1, dadurch gekennzeichnet, daß der Kontakt zwischen dem Beschikkungsgasstrom und dem flüssigen Nitril-Absorbens bei einer Temperatur von 20 bis 250°C bewirkt wird.

8. Verfahren nach Anspruch 1, dadurch gekennzeichnet, daß der Kontakt des Beschickungsgasstroms mit dem flüssigen Nitril-Absorbens bei einem Druck von Atmosphärendruck (101,35 kPa) bis 350 kPa bewirkt wird.

9. Verfahren nach Anspruch 1, dadurch gekennzeichnet, daß 50 bis 70% des Kohlendioxids in dem Beschickungsgasstrom durch das flüssige Nitril-Absorbens absorbiert werden.

10. Verfahren nach Anspruch 1, gekennzeichnet durch einen $CO_2$/CO-Trennfaktor von 10:1 bis 40:1.

11. Verfahren zur Abtrennung von Kohlenmonoxid und Kohlendioxid aus einem Beschickungsgasstrom, der Kohlenmonoxid, Kohlendioxid und mindestens ein weiteres Gas enthält, dadurch gekennzeichnet, daß man den Beschickungsgasstrom mit Propionitril in Kontakt bringt, wobei die Temperatur des Gasstroms während der Abtrennung unterhalb der Zersetzungstemperatur des Propionitrils liegt, und den Kontakt zwischen dem gelöstes Kohlenmonoxid und Kohlendioxid enthaltenden Propionitril und dem Beschickungsgasstrom unterbricht.

12. Verfahren zur Abtrennung von Kohlenmonoxid und Kohlendioxid aus einem Beschickungsgasstrom, der Kohlenmonoxid und Kohlendioxid und mindestens ein weiteres Gas enthält, dadurch gekennzeichnet, daß man den Beschickungsgasstrom mit 3-Methoxypropionitril in Kontakt bringt, wobei die Temperatur des Gasstroms während der Abtrennung unterhalb der Zersetzungstemperatur des 3-Methoxypropionitrils liegt, und den Kontakt zwischen dem gelöstes Kohlenmonoxid und Kohlendioxid enthaltenden 3-Methoxypropionitril und dem Beschickungsgasstrom unterbricht.

**Revendications**

1. Procédé pour la séparation simultanée d'oxyde de carbone et d'anhydride carbonique d'un courant

de gaz d'alimentation contenant de l'oxyde de carbone, de l'anhydride carbonique et au moins un composant gazeux supplémentaire, caractérisé en ce qu'on met en contact le courant de gaz d'alimentation avec un nitrile liquide comme absorbant répondant à la formule générale R—CN, où R est choisi pari des groupes alkyle ayant de 1 à 5 atomes de carbone et des groupes alcoxyalkyle ayant de 2 à 10 atomes de carbone, et des mélanges de ceux-ci, pour former un mélange absorbant de nitrile liquide oxyde de carbone-anhydride, carbonique en ce qu'on maintient la température du mélange au cours de la séparation à une température inférieure à la température de décomposition du nitrile liquide utilisé comme absorbant, et en ce qu'on retire le nitrile liquide utilisé comme absorbant, le mélange oxyde de carbone-anhydride carbonique, du contact avec le courant de gaz d'alimentation.

2. Procédé selon la revendication 1, dans lequel R est un groupe alkyle ayant 1 à 15 atomes de carbone.

3. Procédé selon la revendication 2, dans lequel R est un éthyle ou un propyle.

4. Procédé selon la revendication 1, dans lequel R est un groupe alcoxyalkyle ayant de 2 à 10 atomes de carbone.

5. Procédé selon la revendication 4, dans lequel R est un méthoxyéthyle ou un méthoxybutyle.

6. Procédé selon la revendication 1, dans lequel le courant de gaz d'alimentation est choisi parmi de gaz de houille, le gaz naturel et le gaz de synthèse.

7. Procédé selon la revendication 1, dans lequel la mise en contact du courant de gaz d'alimentation avec le nitrile liquide utilisé comme absorbant s'effectue à une température de 20° à 250°C.

8. Procédé selon la revendication 1, dans lequel la mise en contact du courant de gaz d'alimentation avec le nitrile liquide utilisé comme absorbant s'effectue à une pression allant de la pression atmosphérique (101,35 kPa) à 350 kPa.

9. Procédé selon la revendication 1, dans lequel de 50 à 70% de l'anhydride carbonique du courant de gaz d'alimentation sont absorbés par le nitrile liquide utilisé comme absorbant.

10. Procédé selon la revendication 1, caractérisé par un facteur de séparation $CO_2/CO$ de 10 à 1 à 40 à 1.

11. Procédé de séparation de l'oxyde de carbone et de l'anhydride carbonique d'un courant de gaz d'alimentation contenant de l'oxyde de carbone, de l'anhydride carbonique et au moins un gaz supplémentaire, caractérisé en ce qu'on met en contact le courant de gaz d'alimentation avec du propionitrile dans lequel la température du courant de gaz au cours de la séparation est inférieure à la température de décomposition du propionitrile et en ce qu'on retire le propionitrile contenant de l'oxyde de carbone et de l'anhydride carbonique dissous du contact avec le courant de gaz d'alimentation.

12. Procédé pour la séparation d'oxyde de carbone et d'anhydride carbonique dans un courant de gaz d'alimentation contentant de l'oxyde de carbone et du gaz carbonique et au moins un gaz supplémentaire, caractérisé en ce qu'on met en contact le courant de gaz d'alimentation avec du 3-méthoxypropionitrile dans lequel la température du courant de gaz au cours de la séparation est inférieure à la température de décomposition du 3-méthoxypropionitrile, et en ce qu'on retire de 3-méthoxypropionitrile contenant de l'oxyde de carbone et de l'anhydride carbonique dissous du contact avec le courant de gaz d'alimentation.